# EUROPEAN PATENT APPLICATION

(11) **EP 1 717 213 A1**
(43) Date of publication of application: **02.11.2006**
(21) Application number: 05709873.3
(22) Date of filing: 08.02.2005
(51) Int. Cl.: C03C 17/23, C03C 17/06, C03C 17/34, C09C 1/28, C09D 201/00, C09D 7/12

(54) **GLASS ARTICLE AND METHOD FOR FORMING DISPLAY ON SURFACE OF GLASS ARTICLE**

(30) Priority: 09.02.2004 JP 2004032212
(71) Applicant: Nippon Sheet Glass Company, Limited, Tokyo 105-8552 (JP)
(72) Inventor: OGAWA, Hisashi, c/o NIPPON SHEET GLASS CO., LTD., Tokyo 105-8552 (JP); MARUYAMA, Toru, c/o NIPPON SHEET GLASS CO., LTD., Tokyo 105-8552 (JP); ONO, Kazuhisa, c/o NIPPON SHEET GLASS CO., LTD., Tokyo 105-8552 (JP); YANAGASE, Shigeru, c/o NIPPON SHEET GLASS CO., LTD, Tokyo 105-8552 (JP); INO, Juichi, c/o NIPPON SHEET GLASS CO., LTD., Minato-ku, Tokyo 105-8552 (JP)
(74) Representative: Albrecht, Thomas
(86) International application number: PCT/JP2005/001821
(87) International publication number: WO 2005/075369

(57) **Abstract**

A glass article has an indication on its surface. The indication has gloss and high luminance and is capable of providing a variety of color tones. The indication is made of a composition containing a glossy pigment comprising glass flakes coated with metal oxide having a refractive index higher than that of glass and/or a glossy pigment comprising glass flakes coated with metal. The indication is formed by applying a paint containing a glossy pigment comprising glass flakes coated with metal oxide having a refractive index higher than that of glass and/or a glossy pigment comprising glass flakes coated with metal and, after that, heating the paint if necessary. A matte inorganic pigment layer may be provided to cover the indication.

## Description

### Field of the Invention

The present invention relates to a glass article having an indication formed on its surface and, more particularly, to a glass article having an indication formed on its surface, wherein the indication has gloss and high luminance and is capable of providing a variety of color tones. The present invention also relates to a method for forming this indication.

### Background of the Invention

As a method for forming an indication on a surface of a glass article such as a window glass for an automobile or a building, JP 2001-220960A describes a method for decorating a window glass of an automobile by blasting fine sands directly onto the window glass to make fine scratches thereon.

Such a method for decorating a window glass of an automobile by the sandblasting just like JP 2001-220960 has a problem of reducing the surface strength of the glass plate when the indication extends widely because the sandblasting scratches the surface of the glass plate essentially. There is still a problem that it is impossible to have gloss and luminance and it is only possible to obtain a hazing white color tone.

JP H11-161215A describes a method for providing a window glass with an optical decoration film for a vehicle by forming a covering layer having a removed portion on a sheet of glass and laminating an optical decoration film thereon in such a manner that the optical decoration film covers the removed portion and the covering layer around the removed portion.

In such a method for manufacturing a window glass with an optical decoration film for a vehicle like JP H11-161215A, a covering layer having a removed portion is required, and the structure of the optical decoration film is complex. Further, it is required to control the thickness of a layer composing the optical decoration film so as to provide sufficient flexibility thereto to prevent the optical decoration film from separating from the removed portion because of the gap between the covering layer and the removed portion.

JP H11-157873A, JP H11-228177A, and JP 2002-20140A describe a method of screen-printing a ceramic paste on a periphery of a sheet of glass in order to prevent organic adhesives used for attaching a glass plate for a vehicle to a vehicle body from being deteriorated due to sunlight and to hide organic adhesives protruding on the glass.

The method of screen-printing a ceramic paste as disclosed in JP H11-157873A, JP H11-228177A, and JP 2002-20140A is considered to be adopted as a method for providing an indication on a glass article. Since the indication is made of ceramic in this case, however, it is impossible to have luminance. Particularly in case of a glass plate for an automobile, a ceramic print is made also on the periphery of the glass plate so that the color of the indication is the same as the color of the periphery. In this case, the indication must be unnoticeable. In addition, the ceramic color can not provide any color tone other than black.

Japanese Patent No. 3284349 (Japanese Patent Application No. H8-530192) describes a method for producing a glass plate having a colored film thereon by applying a transparent or translucent colored layer, which includes gold fine particles having a mean particle diameter of 10 nm or less and being dispersed therein, on the glass plate and heating it.

In case that the method of forming a colored film on a glass plate as described in Japanese Patent No. 3284349 is adopted as a method for providing an indication on a glass article, the indication must have insufficient luminance and gloss even though it has high reflectance because the colored film is used as a shade band for a window glass for an automobile (Lines 44 through 46 in left paragraph of Page 3). Further, the colored film can provide color tone only in gray end of spectrum (Line 41 in left paragraph of Page 3 and Line 31 in left paragraph of the same page) so that it lacks a diversity of color tone.

JP H10-212137A describes a method for manufacturing a window glass for an automobile by forming a heat ray shielding film on a surface of glass ribbon by thermal decomposition method, and removing or reforming an unnecessary area from the heat ray shielding film, wherein the glass ribbon is obtained by the float process.

In case that the method of forming a heat ray shielding film on a surface of glass ribbon by thermal decomposition method as described in JP H10-212137A is adopted as a method for forming an indication on a glass article, the indication must have insufficient luminance and gloss relative to reflecting light so that the stereoscopic effect must be impaired because the film made by thermal decomposition method is flat and smooth reflection film. Further, since the film is formed by the thermal decomposition method on the surface of the glass ribbon which is manufactured by the float process, the surface area of the glass ribbon to be processed is large and an extensional equipment is required. Furthermore, in case of providing a spot mark such as a figure, this method is inefficient because the area to be removed must be greater than the area to be remained.

### Summary of the Invention

It is an object of the present invention to solve the aforementioned problems and to provide a glass article having an indication formed on its surface, wherein the indication has gloss and high luminance and is capable of providing a variety of color tones, and to provide a method for forming the indication.

A glass article of the present invention has an indication on its surface. The indication is made of a composition containing a glossy pigment comprising glass flakes coated with metal oxide having a refractive index higher than that of glass and/or a glossy pigment comprising glass flakes coated with metal.

The indication is formed by applying a paint containing a glossy pigment comprising glass flakes coated with metal oxide having a refractive index higher than that of glass and/or a glossy pigment comprising glass flakes coated with metal.

### Detailed description of the Invention

An indication formed on a surface of a glass article of the present invention has gloss and high luminance and is capable of providing a variety of color tones.

The aforementioned glossy pigment is composed of glass flakes, having extremely flat and smooth surfaces, as a base material. Since each flake works like a fine mirror, the glossy pigment has gloss and excellent luminance. Therefore, the indication made of this glossy pigment has a look which is clear, glossy, and excellent in luminance, incomparably better than conventional ones. By changing the kind of metal oxide having a refractive index higher than that of glass and/or metal to be coated on the glass flakes and/or by changing the thickness of a coating thereof, it is possible to provide a variety of color tones to an indication.

The metal oxide having a refractive index higher than that of glass to be coated on the glass flakes may be at least one selected from the group consisting of titanium oxide, iron oxide, zirconium oxide, chromium oxide, cobalt oxide, zinc oxide, and tin oxide, while the metal to be coated on the glass flakes may be gold, silver, platinum, palladium, titanium, cobalt, nickel, or alloy thereof. In this case, a coating having a high refractive index is obtained, thus it can provide high luminance to the indication.

When the thickness of the glass flakes is from 0.1 to 7 µm, the glass flakes are prevented from being crushed and the finished indication is prevented from having unevenness, whereby the indication has good appearance. When the particle diameters of the glass flakes are in a range of from 5 to 250 µm, the indication has a good look and high luminance.

When the indication is made of a composition containing low-melting glass, the indication strongly sticks to the surface of the glass article so that the indication hardly peels.

When a layer containing a matte inorganic pigment is provided to cover the indication, the surface of the indication is protected. In addition, by changing the thickness of the layer containing a matte inorganic pigment, and/or by changing the kind and/or amount of the matte inorganic pigment contained in the layer containing a matte inorganic pigment, the degree of gloss can be controlled.

The glass article may be a tempered glass plate for an automobile, a laminated safety glass plate for an automobile, a glass plate for a vehicle, and window glass for a building, but not limited thereto.

According to a method for forming an indication on a surface of a glass article of the present invention, the indication having gloss and high luminance and being capable of providing a variety of color tones can be easily formed on a surface of a glass article.

Low-melting glass powder may be added to the aforementioned paint. In this case, the paint is applied to the surface of the glass article and is heated to be fixed thereto, whereby the indication is easily fixed to the surface of the glass article. When the low-melting glass powder is melted by being heated at a high temperature, the melted glass sufficiently wets and covers the glossy pigment and the glass is fixed to a surface of the glass material of the glass article, thereby powerful adhesion occurs.

After the paint is applied to the glass article, a coating paint containing a matte inorganic pigment and low-melting glass powder may be applied on the paint. After that, the coating paint is heated to be fixed thereto, thereby the indication is easily fixed to the surface of the glass article. Besides, the low-melting glass powder is melted by being heated at a high temperature, the melted glass wets and covers the glossy pigment, and the glass is fixed to the coated paint layer, thereby powerful adhesion occurs.

Hereinafter, the present invention will be further described in detail.

A glass article of the present invention is provided with an indication on its surface. The indication is made of a composition containing a glossy pigment composed of glass flakes coated with a metal and/or a glossy pigment composed of glass flakes coated with metal oxide having a refractive index higher than that of glass.

Examples of the metal to be coated on the glass flakes include gold, silver, platinum, palladium, titanium, cobalt, nickel, and alloy thereof. Among these, silver, nickel, or an alloy thereof is preferable because of low cost and excellent quality. When the glass flakes are coated with the metal, the thickness of the coating film is preferably from 0.04 to 0.2 µm. When the thickness is less than 0.04 µm, the gloss inherent in metal significantly decreases so as to make the pigment lose its function as glossy pigment. On the other hand, when the thickness exceeds 0.2 µm, luminance does not follow the used amount of the metal, thus it causes a problem of cost.

The metal oxide having a refractive index higher than that of glass to be coated on the glass flakes preferably has higher refractive index. Examples include anatase type titanium dioxide, rutile type titanium dioxide, iron oxide, zirconium oxide, chromium oxide, cobalt oxide, zinc oxide, and tin oxide. Among these, anatase type titanium dioxide, rutile type titanium dioxide, or iron oxide is preferable from the viewpoint of chemical durability and cost. Especially, rutile type titanium dioxide or iron oxide is preferable. The thickness of the coating film of the metal oxide is suitably adjusted according to the kind of the metal oxide, the required degree of luminance, and/or interference color and is preferably in a range of from 0.03 to 0.8 µm. When the coating film is too thin, it is impossible to obtain sufficient gloss. On the other hand, when the coating film is too thick, cost performance lost.

The refractive index of the metal oxide is required to be higher than the refractive index of glass as the base material. The high refractive index of the metal oxide facilitates total reflection from particle surfaces of the glossy pigment, thus it can provide higher luminance to the coating film. Since the refractive index of glass is normally in a range of from 1.5 to 1.6, anatase type titanium dioxide having a refractive index of about 2.5, rutile type titanium dioxide having a refractive index of about 2.7, or iron oxide having a refractive index of from 2.4 to 2.7 is preferably used so as to obtain high luminance because of the aforementioned total reflection. The coating film of titanium dioxide functions as an interference filter. Therefore, by changing the thickness of the coating film of titanium dioxide, luminance of a variety of colors can be obtained. That is, by adjusting the thickness of the coating film of metal oxide, luminance of delicate chromatic colors is imparted to the face of the printed matter, thereby the indication can be improved in its luxuriousness. When the thickness of the coating film of titanium dioxide is on the order of 0.05 µm, reflected colors of silver are given. In case of about 0.14 µm, reflected colors of red-purple are given. In case of about 0.2 µm, reflected colors of yellowish green are given. The luminance of chromatic colors is much better than print faces using conventional color materials such as pearl mica and can make expressive appearance with stereoscopic effect.

The glossy pigment is required to have flake configuration having large specific surface area in order to obtain higher luminance.

The thickness of the glass flakes as the base material of the glossy pigment is preferably from 0.1 µm to 7 µm. The particle diameter of the glass flakes is preferably from 5 µm to 250 µm. When the particle diameter exceeds 250 µm, the finish of the indication is poor. On the other hand, when the particle diameter is less than 5 µm, the luminance is significantly deteriorated. When the thickness is less than 0.1 µm, the glass flakes are easily broken. When the thickness exceeds 7 µm, the finish of the indication is liable to be uneven, thereby the appearance thereof is deteriorated.

The interference filter function of the coating film depends on smoothness of the surface of the coating film and the surface of the glass flakes. That is, as these surfaces are smoother, scattering of reflected light is effectively inhibited. Therefore, the interference filter effectively functions so as to generate extremely strong reflected light in one direction. Accordingly, glass flakes having excellent surface smoothness are suitably used as the base material.

The glossy pigment may be manufactured by coating surfaces of the glass flakes with metal by means of normal electroless deposition or powder sputtering. For example, JP H2-58582A describes a method for forming a metal coating on surfaces of glass flakes having a mean particle diameter of 40 µm and a thickness of 3 µm by means of electroless deposition. JP S60-86177 describes a method for forming a metal coating on glass flakes having a thickness of about 3 µm and a grain size of about 300-700 µm by means of sputtering.

Known as a method for coating glass flakes with metal oxide is a method of coating surfaces of the glass flakes with metal hydroxide by sol-gel method or liquid phase method and then thermal-dehydrating them. As an example of the sol-gel method, JP H9-176515A describes glass flakes coated with a metal oxide coating film and having an average shape ratio (average thickness/average grain size) of 1/9 to 1 and an average grain size of 25-500µm. The present invention may adopt the glass flakes mentioned above.

As an example of the liquid phase method, described in USP 5,753,371 is a method in which C glass flakes are dispersed in acid aqueous solution and, after that, TiCl₄ solution is introduced while adjusting the pH. The TiCl₄ introduction is finished when an appearance of predetermined interference color has been reached. The method further comprises filtering and washing the reaction product with water and baking the reaction product at a predetermined temperature. The present invention may adopt this method.

According to JP 2001-31421, a method which is improved from the aforementioned liquid phase method and is capable of evenly, uniformly, and stably coating glass flakes with metal hydroxide is provided (hereinafter, referred to as "p liquid phase method"). The glass flakes may also be coated with metal oxide by this p liquid phase method. That is, after the glass flakes are surface-treated with tin chloride in hydrochloric acid solution, the glass flakes are treated with hexachloroplatinic acid as pretreatment. The pretreated glass flakes are added to hydrochloric acid solution of which the pH has been adjusted to about 1.0 to make slurry. The temperature of the slurry is increased to 75°C. TiCl₄ solution is introduced while the pH is adjusted to 1.0. The TiCl₄ introduction in the slurry is finished when an appearance of predetermined interference color is reached, thereby a reaction product is obtained. The reaction product is filtered and washed with water and baked at a predetermined temperature, for example 600°C. According to this p liquid phase method, a product which is evenly, uniformly, and stably coated with metal oxide can be obtained more advantageously than the method of USP 5,753,371. The present invention may adopt this method.

In case of iron oxide, the glass flakes are added to hydrochloric acid solution of which the pH has been adjusted to 2-4 to make slurry. The temperature of this slurry is increased to a temperature of from 50°C to 75°C. FeCl₃ solution is introduced in the slurry while the pH is adjusted to 2-4. FeCl₃ introduction is finished when an appearance of predetermined interference color is reached, thereby a reaction product is obtained. The reaction product is filtered and washed with water and baked at a predetermined temperature, for example 600°C. In addition, it may be reduced to obtain a different glossy pigment.

There is no special limitation on glass composition of the glass flakes to be coated with metal or metal oxide, so the glass flakes may be glass comprising primarily silicon dioxide and containing aluminum oxide, calcium oxide, sodium oxide, and the like in proper amounts. There is no special limitation on kind of glass. Examples of kinds of glass are E-glass and C-glass which are in heavy usage, further include alkali-resistant glass, high-strength glass, silica glass, boron-free E-glass, boron-free alkali glass, and soda-lime glass (A-glass). Typical compositions of these kinds of glass are shown in Table 1.

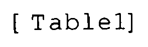

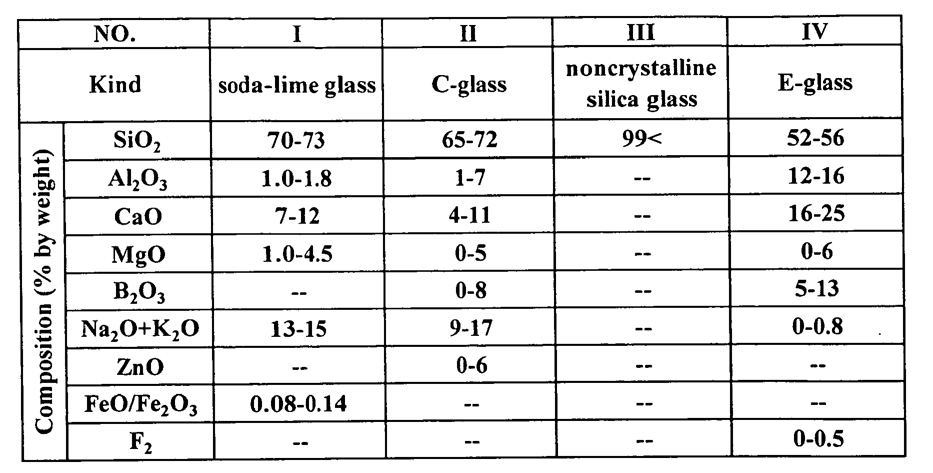

The indication formed on the glass article may be made of a composition containing, in addition to the aforementioned glossy pigment, low-melting glass and/or matte inorganic pigment. In case of using a composition containing low-melting glass, the low-melting glass is melted by being heated, the melted low-melting glass wets and covers the glossy pigment or the like sufficiently so as to develop color and form a film. The indication formed on the glass article is fixed to the glass article at the interface therebetween, thereby strong adhesion occurs. In case of using a composition containing matte inorganic pigment, the degree of gloss can be controlled by changing the proportion of the matte inorganic pigment and the glossy pigment.

The indication may contain an extender pigment, an auxiliary substance, and/or an inorganic filler.

Preferably adopted as the method of forming the indication on the surface of the glass article is a method of applying a paint containing the aforementioned glossy pigment, solvent solution of resin (vehicle component), and the like onto the surface of the glass article. The paint may be prepared by mixing and dispersing the glossy pigment, the solvent solution of resin, and the like by using a paint conditioner, a dissolver, a high-speed mixer, a homo mixer, a kneader, a rolling mill, a sand mill or the like.

As the material of the solvent solution of resin (vehicle component), various conventional resins and solvents may be used. The resin may be gum rosin, wood rosin, tall oil rosin, lime rosin, rosin ester, maleic acid resin, polyamide resin, vinyl resin, nitrocellulose, acetylcellulose, ethyl cellulose, chlorinated rubber, cyclized rubber, ethylene vinyl acetate copolymer, urethane resin, polyester resin, acrylic resin, methacrylic resin, butyral resin, polyvinyl pyrrolidone resin, and alkyd resin and mixtures thereof, water-soluble resin prepared by dissolving one or more of the aforementioned resins, and aqueous emulsion resin thereof. The solvent may be hydrocarbon solvent, alcohol solvent, ketone solvent, ether solvent, ester solvent, or water. Specific examples are pine oil, α-Terpineol, butyl carbitol, butyl carbitol acetate, and propylene glycol.

The solvent solution of the resin (vehicle component) may be a solution in which 10-50 % by mass of the aforementioned resin is dissolved in 50-90 % by mass of the solvent.

The content rate of the glossy pigment in the paint is preferably from 3 to 40 % by mass. When the content rate is less than 3 % by mass, the luminance of the indication may be poor because of too small amount of the glossy pigment. On the other hand, when the content rate of the glossy pigment exceeds 40 % by mass, the fluidity of the paint should be insufficient and the dispersibility of the glossy pigment in the paint should be deteriorated, thus coagulation occurs.

As the method of applying this paint to the surface of the glass article, there are screen printing, gravure printing, spray coating, roll coating, and the like. Among these, the screen printing is simplest and is suitable for partial coating.

It is preferable that, in addition to the glossy pigment and the solvent solution of resin (vehicle component), low-melting glass is added to the paint because the paint can be securely fixed to the glass surface by heating it.

The low-melting glass may be any of various low-melting glasses which are conventionally generally used for ceramic colors. Examples are lead borosilicate glass mainly consisting of PbO, Si₂O, and B₂O₃, bismuth borosilicate glass mainly consisting of Bi₂O₃, Si₂O, and B₂O₃, and zinc borosilicate glass mainly consisting of ZnO, SiO₂, and B₂O₃.

The paint may contain a matte inorganic pigment, an extender pigment, an auxiliary substance, and/or an inorganic filler in such an amount not to deteriorate the gloss.

The matte inorganic pigment may be any of conventional matte inorganic pigments. For examples, CuO· Cr₂O₃ (black), CoO·Cr₂O₃ (black), Fe₂O₃ (brown), TiO₂ (white), CoO·Al₂O₃ (blue), and NiO·Cr₂O₃ (green) may be used.

The amount of the matte inorganic pigment is in the range of from 0% to 40% of the paint. When the amount exceeds 40%, the percentage of the low-melting glass is inevitably reduced so that the film formation should be insufficient when the paint is heated, and it leads to a problem that adhesive primer seeps into the film in a bonding step.

The inorganic filler is selected from inorganic fillers which are not melted at a high temperature. Metallic powder such as Al, Zn, Fe, Ni, Sn, or Cu is preferably used as the inorganic filler. To control the fluidity when the paint is heated at high temperature, metallic oxide of, for example, alumina, silica, zircon, or zircon silicate may be used as the inorganic filler. To adjust the thermal expansion coefficient of the paint, low-expansion powder of, for example, β-eucryptite, β-spodumene, cordierite, or molten silica may also be used as the inorganic filler.

The smaller the particle diameter of the inorganic filler powder is, the better because the work and effect of the inorganic filler powder depend on the surface area of particles thereof. However, too small particle diameter leads to a problem of rapidly increasing the fusing temperature of the paint. Therefore, it is preferable that the particle diameter is selected from a range of from about 0.05 to about 5.0 µm, preferably from about 0.1 to about 1.0 µm.

When the amount of the inorganic filler powder exceeds 10%, the fusing temperature of the paint is increased, and it leads to a problem of poor adhesion with the glass article. If the purpose of adding the inorganic filler powder is achieved by another method or by characteristics of the low-melting glass, the inorganic filler powder is not indispensable.

Examples of the extender pigment include barium sulfate, barium carbonate, calcium carbonate, gypsum, alumina white, talc, calcium silicate, and precipitated magnesium carbonate.

Examples of the auxiliary substance include plasticizer, antioxidant, ultraviolet rays protective agent, and antistatic agent.

The content rate of the solvent solution of resin (vehicle component) in the paint is suitably determined according to the coating method to be adopted for the resultant paint and is not especially limited. When the paint containing low-melting glass has the form of ink suitable for screen printing, the content rate of the solvent solution of resin is preferably selected from a range of from 10 to 40% by mass. When the paint is adapted for spray coating or rolling coating, the content rate of the solvent solution of resin is preferably selected from a range of from 30 to 70% by mass.

The indication of the present invention is obtained by drying the paint applied on the glass article. The paint may be dried, for example, for 3-15 minutes at about 100-200°C.

When the paint contains the low-melting glass, the paint applied to the glass article may be heated to be fixed in a oven after dried. The paint may be heated for about 1-10 minutes at about 500-800°C, for example, at 700°C.

During the paint is heated at a high temperature (500°C or more), organic matters are decomposed and removed. As a result, no organic matters are left in the film thus formed. The low-melting glass is melted on the glass article by heating it at a high temperature (not so high as to melt the glass article) so as to wet and cover the glossy pigment and the like sufficiently. The paint forms a film and is developed in color. The film is fixed to a surface of the glass article, thereby powerful adhesion occurs.

According to a usual processes, a glass plate for an automobile or the like is bent by press-fitting the glass plate between a pair of molds. According to another usual process, a glass plate is bent by vacuuming the glass plate to a mold in a oven. In these processes, a glass plate is preheated from room temperature to about 660°C in a tunnel oven, and then bent in a batch oven which is connected to the tunnel oven, at 640-720°C. When the paint is heated and fixed to the glass plate and is crystallized during the preheating process, the paint has no fluidity (with no reduction in glass viscosity) when the glass plate is bent in the oven during the subsequent bending process because the glass has been crystallized, thus good finish can be obtained.

The indication made by applying this paint may be coated with a protective film on its uppermost surface in order to improve the durability. The protective film may be made of an organic material such as acrylic resin, polyester resin, or the like or an inorganic material such as silicon dioxide, aluminum oxide, or the like. If necessary, the surface of the protective film may be treated with a surface treatment agent such as a coupling agent. As a specific means for improving the durability, a method disclosed in JP S62-91567A, JP H07-268241A, or USP 5,436,077 may be adopted.

The glass article may have a matte inorganic pigment containing layer for coating the surface of the indication. The matte inorganic pigment containing layer provides works and effects that the surface of the indication can be protected and that the degree of gloss can be controlled by changing the thickness of the matte inorganic pigment containing layer, and/or by changing the kind and/or the amount of the matte inorganic pigment contained in the matte inorganic pigment containing layer. In this case, after the paint is applied to the surface of the glass article and dried, the coating material containing a matte inorganic pigment and low-melting glass powder is applied over the paint and is then heated to be fixed, thereby a matte inorganic pigment layer is formed. The matte inorganic pigment and the low-melting glass may be the same as used in the paint for the indication.

### Examples and Comparative Examples

Hereinafter, the present invention will be described in further detail with reference to the following examples and comparative examples. The present invention is not limited by the following examples and various changes and modification may be made without departing from the spirit of the present invention.

### [Example 1]

A first layer paint containing a glossy pigment was prepared from components in the proportion shown in Example 1 of Table 2. The first layer paint was applied to a soda lime glass plate by screen print using a patterned screen of #120 mesh. Then, the first layer paint was dried for 4 minutes at 180°C. In the glossy pigment contained in the first layer paint, the average thickness and average particle diameter of glass flakes and the thickness of titanium oxide coating on the glass flakes are shown in Table 3. After that, a second layer paint containing a matte inorganic pigment in the proportion shown in Table 4 was applied over the first layer paint by the screen print in the same manner. The second layer paint was dried for 4 minutes at 180°C. After that, the glass plate applied the first layer paint and the second layer paint was heated for 100 seconds at 700°C and then quenched with air, thereby a sample on which a glossy pigment containing layer as a first layer and a matte inorganic pigment containing layer as a second layer were formed on the glass plate in this order was obtained.

As the solvent solution of low-melting glass containing resin in Table 2, G1-1334 (available from Okuno Chemical Industries, Co., Ltd.) was used. As the solvent solution of resin in Table 2, Oil 1063S (available from Okuno Chemical Industries, Co., Ltd.) was used. As the second layer paint in Table 2, PFA-1130KC-BK (available from Okuno Chemical Industries, Co., Ltd.) was used.

The thickness of the obtained sample was measured by optical microscope-image analysis. The appearance (gloss, stereoscopic effect, luminance, and color tone) of the obtained sample was observed with eyes under natural light. These results are shown in Table 5.

As shown in Table 5, the obtained sample has silver color tone with gloss, has stereoscopic effect, and is excellent in luminance.

**[Table 2]**

| **Composition of First layer paint** | **Example 1** | **Example 2** | **Example 3** |
|---|---|---|---|
| **Glossy pigment** | **coating (MC1020RS available from Nippon Sheet Glass Co., Ltd.) : 10 wt%** | **coating (MC1020RG available from Nippon Sheet Glass Co., Ltd.) : 10 wt%** | **coating (MC1020RR available from Nippon Sheet Glass Co., Ltd.) : 10 wt%** |
| **Solvent solution of resin [pine oil: 98 wt%, aromatic hydrocarbon: 2** | **10 wt%** | **10 wt%** | **10 wt%** |
| **Solvent solution of low-melting glass containing resin [zinc borosilicate glass powder: 73 wt%, pine oil: 21 wt%, cellulosic resin: 3 wt%, rosin resin: 3 wt%]** | **80 wt%** | **80 wt%** | **80 wt%** |

**[Table 3]**

| | **Example 1** | **Example 2** | **Example 3** |
|---|---|---|---|
| **Glossy pigment** | **glass flakes with titanium dioxide coating (MC1020RS available from Nippon Sheet Glass Co., Ltd.)** | **glass flakes with titanium dioxide coating (MC1020RG available from Nippon Sheet Glass Co., Ltd.)** | **glass flakes with titanium dioxide coating (MC1020RR available from Nippon Sheet Glass Co., Ltd.)** |
| **Average thickness of glass flakes** | **1 µm** | **1 µm** | **1 µm** |
| **Average particle diameter** | **20 µm** | **20 µm** | **20 µm** |
| **Thickness of coating** | **about 50-100 nm** | **about 150-200 nm** | **about 100-150 nm** |

**[Table 4]**

| **Composition of Second layer paint** | **Examples 1, 2, 3** |
|---|---|
| **zinc borosilicate glass powder** | **57 wt%** |
| **matte inorganic pigment (CuO-Cr**_{**2**}**O**_{**3**}**-MnO)** | **22 wt%** |
| **pine oil** | **17 wt%** |
| **cellulosic resin** | **2 wt%** |
| **rosin resin** | **2 wt%** |

**[Table 5]**

| **Item** | **Example 1** | **Example 2** | **Example 3** | **Comparative Example 1** | **Comparative Example 2** |
|---|---|---|---|---|---|
| **Thickness of First layer (µm) *1** | **20** | **20** | **20** | **0.2** | **20** |
| **Thickness of Second layer (µm) *1** | **20** | **20** | **20** | **--** | **20** |
| **Color of appearance** | **silver** | **green** | **red** | **gray** | **black** |
| **Gloss *2** | **O** | **O** | **O** | **Δ** | **×** |
| **Stereoscopic effect *3** | **O** | **O** | **O** | **×** | **×** |
| **Luminance *4** | **○** | **○** | **○** | **×** | **×** |

| | | | | | |
|---|---|---|---|---|---|
| *1) Values measured by optical microscope-image analysis *2) Gloss: the appearance of paint surface was observed through the glass plate with eyes and was evaluated according to the following evaluation criteria: ○: strong gloss Δ: moderate gloss ×: weak gloss *3) Stereoscopic effect: the appearance of paint surface was observed through the glass plate with eyes and was evaluated according to the following evaluation criteria: ○: Glossy pigment appeared to be in three dimensions Δ: Glossy pigment appeared to be in three dimensions slightly ×: Glossy pigment appeared to be in two dimensions *4) Luminance: the appearance of paint surface was observed through the glass plate with eyes and was evaluated according to the following evaluation criteria: ○: Strong luminance Δ: Moderate luminance ×: Weak luminance | | | | | |

### [Example 2]

A sample was prepared in the same manner as Example 1 except that a first layer paint shown in Example 2 of Table 2 and Table 3 was used. The average thicknesses of the first layer and the second layer were measured and the obtained sample was observed with eyes in the same manner as Example 1. The results are shown in Table 5.

The obtained sample has green color tone with gloss, has stereoscopic effect, and is excellent in luminance.

### [Example 3]

A sample was prepared in the same manner as Example 1 except that a first layer paint shown in Example 3 of Table 2 and Table 3 was used. The average thicknesses of the first layer and the second layer were measured and the obtained sample was observed with eyes in the same manner as Example 1. The results are shown in Table 5.

The obtained sample has red color tone with gloss, has stereoscopic effect, and is excellent in luminance.

### [Comparative Example 1]

A sample was prepared in the same manner as Example 1 except that a paint for shade band shown in Comparative Example 1 of Table 6 was used as the first layer paint and no second layer was formed. The average thickness of the first layer was measured and the obtained sample was observed with eyes in the same manner as Example 1. The results are shown in Table 5.

**[Table 6]**

| **Composition of First layer** | **Comparative Example 1** | **Comparative Example 2** |
|---|---|---|
| **Paint for shade band** | **composite material of gold fine particles-nylon 11: 5 wt%,** | **--** |
| | **salt of Co organic acid: 15 wt%,** | |
| | **modified silicone oil: 2 wt%,** | |
| | **cellulose binder: 28 wt%,** | |
| | **polyamide binder: 28 wt%,** | |
| | **silicone oil: 0.1 wt%,** | |
| | **carbitol: 11.9 wt%,** | |
| | **cresol: 10 wt%** | |
| **Black ceramic** | **--** | **zinc borosilicate glass powder: 57 wt%,** |
| | | **black pigment: 22 wt%,** |
| | | **pine oil: 17 wt%,** |
| | | **cellulosic resin 2 wt%,** |
| | | **rosin resin 2 wt%** |

The obtained sample has gray color tone and is poor in all of gloss, stereoscopic effect, and luminance.

### [Comparative Example 2]

A sample was prepared in the same manner as Example 1 except that a black ceramic paint shown in Comparative Example 2 of Table 6 was used as the first layer paint. The average thicknesses of the first layer and the second layer were measured and the obtained sample was observed with eyes in the same manner as Example 1. The results are shown in Table 5.

The obtained sample has black color tone and is poor in all of gloss, stereoscopic effect, and luminance.

## Claims

1. A glass article having an indication formed on a surface thereof, wherein the indication is made of a composition containing a glossy pigment which is glass flakes coated with metal oxide having a refractive index higher than that of glass and/or a glossy pigment which is glass flakes coated with metal.

2. A glass article as claimed in claim 1, wherein said metal oxide having the refractive index higher than that of glass is at least one selected from a group consisting of titanium oxide, iron oxide, zirconium oxide, chromium oxide, cobalt oxide, zinc oxide, and tin oxide, while said metal is at least one selected from a group consisting of gold, silver, platinum, palladium, titanium, cobalt, and nickel.

3. A glass article as claimed in claim 1 or 2, wherein said glass flakes have thickness of from 0.1 µm to 7 µm and particle diameters of from 5 µm to 250 µm.

4. A glass article as claimed in any one of claims 1 through 3, wherein said indication is an indication made of a composition containing said glossy pigment and low-melting glass.

5. A glass article as claimed in any one of claims 1 through 4, further having a matte inorganic pigment containing layer covering said indication.

6. A glass article as claimed in any one of claims 1 through 5, wherein the glass article is a glass plate.

7. A method for manufacturing the glass article as claimed in claim 1, wherein the indication is formed by applying a paint containing a glossy pigment which is glass flakes coated with metal oxide having a refractive index higher than that of glass and/or a glossy pigment which is, glass flakes coated with metal.

8. A method as claimed in claim 7, wherein said paint contains low-melting glass powder and the indication is fixed to a surface of the glass article by heating the paint after the paint is applied.

9. A method as claimed in claim 7 or 8, wherein, after said paint is applied, a coating paint containing a matte inorganic pigment and low-melting glass powder is applied over said paint and is then heated to be fixed.
